# EUROPÄISCHE PATENTSCHRIFT

(11) **EP 0 690 547 B1**
(45) Veröffentlichungstag und Bekanntmachung des Hinweises auf die Patenterteilung: **22.04.1998**
(21) Anmeldenummer: 95109890.4
(22) Anmeldetag: 24.06.1995
(51) Int. Cl.: H02K 15/02, H02K 15/00

(54) **Einbau eines Stators in ein Gehäuse**
Mounting of a stator in a housing
Montage d'un stator dans une boîte

(30) Priorität: 01.07.1994 DE 4423059
(43) Veröffentlichungstag der Anmeldung: 03.01.1996
(73) Patentinhaber: ABB PATENT GmbH, 68309 Mannheim (DE)
(72) Erfinder: Fischl, Rolf, D-68642 Bürstadt (DE)
(74) Vertreter: Rupprecht, Klaus, Dipl.-Ing.

(56) Entgegenhaltungen:
- US-A- 4 157 613
- PATENT ABSTRACTS OF JAPAN vol. 6 no. 140 (E-121) [1018], 29.Juli 1982 & JP-A-57 065251 (TOKYO SHIBAURA DENKI K.K.) 20.April 1982
- PATENT ABSTRACTS OF JAPAN vol. 10 no. 319 (E-450) [2375], 30.Oktober 1986 & JP-A-61 128747 (HITACHI ELEVATOR ENG & SERV CO LTD) 16.Juni 1986

## Beschreibung

Die Erfindung betrifft ein Verfahren zum Einbau eines Stators eines Turbogenerators in das Generatorgehäuse bei Fehlen geeigneter Hebezeuge, insbesondere eines Krans mit ausreichender Hubkraft, welcher Turbogenerator in einer Kraftwerksanlage aufgestellt ist.

Das Verfahren zum Einbau eines Stators in ein Generatorgehäuse ist an und für sich bekannt. Üblicherweise erfolgt der Einbau dort, wo der Generator insgesamt hergestellt wird, nämlich in der Fabrik. Hier stehen alle erforderlichen Werkzeuge und Hebezeuge, insbesondere Krane mit hohen Traglasten zur Verfügung, so daß hieraus keine schwerwiegenden Probleme resultieren.

Ebenso steht in aller Regel bei Errichtung einer Kraftwerksanlage ausreichendes Hebezeug zur Verfügung, um schwere Großkomponenten leicht zu bewegen und an die vorgesehenen Einbauorte zu bringen. Allerdings werden bis auf die im Maschinenhaus der Kraftwerksanlage fest installierten Hebezeuge, wie Flaschenzüge, alle weiteren Hebezeuge nach erfolgter Errichtung von der Kraftwerksbaustelle abgezogen und stehen demgemäß anschließend nicht mehr zur Verfügung.

Die einleitend angesprochene Situation stellt sich ein, wenn ein bereits im Betrieb gewesener Generator vor Ort, das heißt in der betreffenden Kraftwerksanlage, repariert oder überholt werden muß. Ein solches Auswechseln des Statorteils stößt hier vielfach auf Schwierigkeiten, welche in der Fabrik nicht auftreten, weil vor Ort, das heißt in der Kraftwerksanlage, im allgemeinen nur Kleinhebezeuge vorhanden sind.

Der Einbau eines neuen beziehungsweise reparierten Stators in das im Maschinenhaus befindliche Generatorgehäuse wird dadurch erschwert, daß ein solcher Stator im allgemeinen ein Gewicht von wenigstens 100 Tonnen aufweist und sich daher nicht ohne weiteres und ohne Schaden zu nehmen mit Hilfe von irgendwelchen Hilfsmitteln transportieren läßt. Eine weitere Erschwernis kommt hinzu, wenn die Kraftwerksanlage, in welcher der Generator überholt werden soll, sich in einer verkehrsmäßig schlecht entwickelten Gegend befindet oder in einer Region, die technisch noch nicht so weit erschlossen ist, daß die benötigten Hebezeuge für einen derartigen Arbeitseinsatz zur Verfügung stehen.

Ausgehend von diesem Stand der Technik ist es Aufgabe der Erfindung, ein Verfahren der eingangs genannten Art anzugeben, welches auf die Besonderheiten der Reparatur vor Ort zugeschnitten ist und mit den in einer Kraftwerksanlage zur Verfügung stehenden Möglichkeiten erfolgreich ohne Beschädigung des Stators durchzuführen.

Diese Aufgabe wird erfindungsgemäß durch die kennzeichnenden Merkmale des Patentanspruchs 1 gelöst.

Demgemäß ist vorgesehen, daß der Stator möglichst nahe an den vorgesehenen Einbauort gebracht wird, zum Beispiel mittels Tieflader, daß der Stator mittels mechanisch oder hydraulisch betätigter Hebestützen soweit angehoben wird, daß ein mit Rollen versehener Transportsattel unter den Stator eingefahren werden kann, auf welchen der Stator abgesetzt und soweit zum Generatorgehäuse bewegt wird, bis dessen Stirnseite und die des Stators aneinandergrenzen, daß ein Träger durch den zylindrischen Hohlraum des Stators und des angrenzenden Generatorgehäuses hindurchgeführt wird und beiderseits der freien Stirnseiten von Stator und Generatorgehäuse abgestützt wird, daß der Träger nach allen Richtungen ausgerichtet wird, so daß der Stator und das Generatorgehäuse miteinander fluchten, daß der Träger mit einer Gleitfläche versehen wird, welche aus hochtragfähigem, druckstabilem und gleitgünstigem Material, vorzugsweise aus Polytetrafluoräthylen oder Polyamid, besteht, daß die Gleitfläche mit dem Stator zusammenarbeitet und der Stator auf dieser so gebildeten Gleitbahn in seine Einbaulage im Generatorgehäuse eingeführt wird, daß nach Erreichen der Einbaulage des Stators der Träger entfernt wird und der Stator im Generatorgehäuse verankert wird.

Bei der Durchführung dieser erfindungsgemäßen Einzelmaßnahmen ist von Bedeutung, daß weder ein Autokran noch ein sogenannter Raupenkran in das Maschinenhaus, wo sich das Generatorgehäuse befindet, fahren und dort eingesetzt werden können. Andererseits muß der Rollweg für den Transportsattel, auf welchem der Stator vom Entladeort bis zum Maschinenhaus bewegt wird, die auftretende Flächenbelastung durch das Gewicht des Stators aufnehmen können. Dies allerdings sollte normalerweise nicht zu Problemen Anlaß geben, da üblicherweise die Zufahrtswege zum Maschinenhaus für derartige Lasten ausgelegt sind.

In weiterer Ausgestaltung der Erfindung ist ferner vorgesehen, daß der Rollweg zwischen dem Entladeort und dem Generatorgehäuse zumindest für den Transport des Stators geebnet wird.

Entsprechend einer bevorzugten Ausführungsform des erfindungsgemäßen Verfahrens wird der Stator entsprechend seinem Innenprofil unterfüttert, wobei die Unterfütterung einen plankonvexen Querschnitt aufweist. Hierbei liegt die konvexe Seite an der Innenfläche des Stators an, während die plane Fläche der Unterfütterung eine Doppelfunktion hat, die nachfolgend erläutert wird. Zunächst wird die Unterfütterung in der Bodenlage der Innenbohrung des Stators angeordnet, wo sie eine Auflagefläche für einen Träger bildet, welcher erfindungsgemäß den Stator durchgreift. Hierzu wird mittels eines zur Verfügung stehenden Flurförderzeugs, zum Beispiel eines Raupenkrans, der Träger in den Stator und in das Generatorgehäuse eingefahren, bis er sowohl aus dem einen Ende des Stators als auch aus dem anderen Ende des Generatorgehäuses herausragt und dort jeweils auf Tragstützen sich abstützt.

Nach Einfahren des Trägers wird die Unterfütterung von der Bodenlage in die Deckenlage versetzt. Dort stützt sich die Planfläche der Unterfütterung auf der ebenfalls planen Trägeroberfläche ab.

Aufgrund der in weiterer Verbesserung der Erfindung vorgesehenen Behandlung der mit einer Gleitfläche versehenen Trägeroberfläche mit Schmiermittel ist es nunmehr verhältnismäßig leicht, den Stator in das Generatorgehäuse hinein zu bewegen, wobei er mit der Unterfütterung auf der vorgeschriebenen Gleitbahn auf dem Träger gleitet.

Entsprechend einer bevorzugten Weiterbildung des erfindungsgemäßen Verfahrens ist vorgesehen, daß der Stator in das Generatorgehäuse gezogen wird. Hierbei kann es vorteilhaft sein, daß an wenigstens zwei diametral gegenüberliegenden Stellen am Umfang des Stators Zuglaschen angeordnet sind, an welchen die Zugkräfte angreifen. Eine weitere vorteilhafte Besonderheit des erfindungsgemäßen Verfahrens kann darin bestehen, daß der Stator beim Entladen, zum Beispiel vom Tieflader auf eine Höhe von wenigstens 150 mm oberhalb des späteren Rollweges angehoben wird, damit der erwähnte Transportsattel richtig plaziert werden kann.

Diese und weitere vorteilhafte Ausgestaltungen sind Gegenstand der Unteransprüche.

Anhand eines in der schematischen Zeichnung wiedergegebenen Ausführungsbeispiels der Erfindung sollen die Erfindung, vorteilhafte Ausgestaltungen und Verbesserungen sowie besondere Vorteile der Erfindung näher erläutert und beschrieben werden.

Es zeigen:
- Fig. 1: einen schematischen Ausschnitt aus einer Kraftwerksanlage mit einem für den Einbau vorgesehenen Generatorgehäuse, mit einem auf einem Tieflader befindlichen Stator und dem Rollweg zum Generatorgehäuse im Längsschnitt von der Seite
- Fig. 2: die Anordnung gemäß Fig. 1 mit angehobenem Stator und entferntem Tieflader
- Fig. 3: die Anordnung gemäß Fig. 2 mit eingeführtem Träger
- Fig. 4: die Anordnung gemäß Fig. 3 mit an das Generatorgehäuse bewegtem Stator und durch das Generatorgehäuse hindurchgeführtem Träger
- Fig. 5: die Anordnung gemäß Fig. 4 mit in das Generatorgehäuse eingeführtem Stator
- Fig. 6: eine Stirnseitenansicht des auf den Träger abgestützten Stators

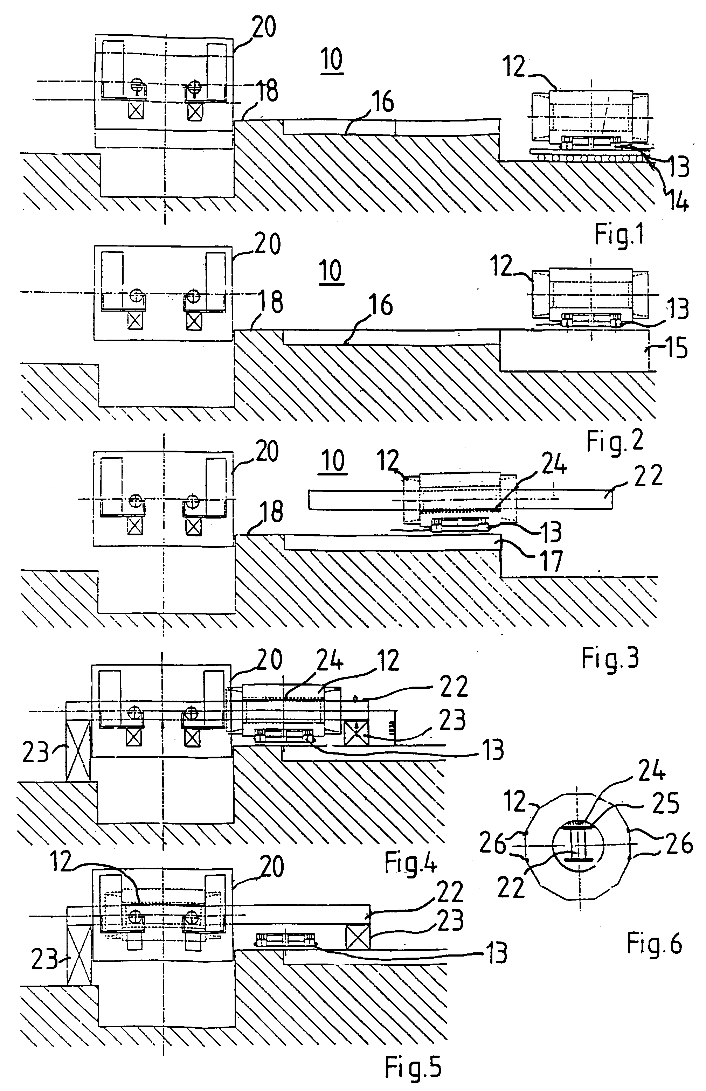

In Fig. 1 ist ein Teil einer Kraftwerksanlage 10 mit einem Stator 12 gezeigt, der sich mit einen Transportsattel 13 auf einem Tiefladefahrzeug 14 befindet. Das Tiefladefahrzeug 14, welches den zum Einbau vorgesehenen Stator 12 möglichst nah an den Einbauort transportiert hat, befindet sich auf einem Niveau, das ersichtlich niedriger liegt als das Maschinenfundament 18, welches im vorliegenden Fall mit einer Fundamentvertiefung 16 versehen ist, welche den Standplatz für einen Anfahrdieselmotor dient.

Bei der gezeigten Kraftwerksanlage 10 ist lediglich ein hier nicht näher dargestellt Maschinenhauskran verfügbar, der jedoch nicht ausreicht, den Stator 12 vom Entladeort, an welchem sich der Tieflader 14 befindet, zu dem vorgesehenen Einbauort in einem Generatorgehäuse 20 zu bewegen, das aus der für den Generator vorgesehenen Fundamentgrube angehoben ist. Damit der Stator 12 dorthin gelangt muß er zunächst angehoben werden, um die Höhendifferenz zwischen dem Entladeort vom Tieflader 14 auf das Niveau des Fundaments 18 zu überwinden.

Um den Stator 12 auf dieses Niveau des Fundaments 18 anzuheben sind nicht näher gezeigte Hebestützen vorgesehen, die den Stator 12 gemeinsam mit dem mit Panzerrollen versehenen Transportsattel 13 auf die gewünschte Höhe, zum Beispiel 1650 mm, anheben. Sobald die gewünschte Höhe erreicht ist, wird der Zwischenraum mit einem stabilen Unterbau ausgefüllt, welcher das Gewicht des mit dem Transportsattel versehenen Stators aufnehmen kann. In ähnlicher Weise ist auch die Fundamentvertiefung 16 ausgefüllt, so daß der Rollweg vom ursprünglichen Entladeplatz bis zum Generatorgehäuse 20 geebnet ist. Nun kann der Stator 12 auf den Transportsattel 13 zum Generatorgehäuse 20 gerollt werden.

Bevor der Stator 12 jedoch an das Generatorgehäuse 20 herangeführt wird, wird zunächst ein Träger 22 in das Innere des Stators 12 eingeführt, wobei zunächst dort in Bodenlage eine Unterfütterung 24 eingebracht wird, die vorzugsweise aus Holz gefertigt ist und einen plankonvexen Querschnitt aufweist. Hierbei liegt die konvexe Fläche am Innenumfang des Stators an, während die plane Fläche mit dem Träger zusammenarbeitet. Auf diese Weise wird gleichzeitig mit dem Rollen des Stators 12 auf das Generatorgehäuse 20 zu der Träger 22 in das Generatorgehäuse 20 ein und anschließend hindurchgeführt, wo er an beiden Enden auf Stützelementen 23 abgestützt ist, wie in Fig. 4 gezeigt.

In diesem Stadium wird die Unterfütterung 24 in die Oberlage versetzt, das heißt in eine Lage oberhalb des Trägers 22. Der Träger 22 ist seinerseits bereits vorher mit einer etwa 2 mm dicken Gleitschicht aus einem hoch tragfähigen, druckstabilen und gleitgünstigen Material beschichtet, vorzugsweise Polytetrafluoräthylen oder Polyamid, welches in der Lage ist, einerseits das Gewicht des Stators bezogen auf die schmale Auflagefläche, welche die Unterfütterung auf der Oberfläche des Trägers 22 findet, aufzunehmen und hierbei einen möglichst geringen Gleitwiderstand dem Verschieben des Stators 12 auf dem Träger 22 entgegenzustellen. Vorteilhafterweise wird hierzu, das heißt um den Gleitwiderstand zu senken, die Gleitschicht 25 des Trägers 22 mit Schmiermittel versehen, um so eine weitere Reduzierung des Gleitwiderstandes zu bewirken.

Bevor der Stator 12 in das Generatorgehäuse 20 eingeführt wird, erfolgt zunächst das Ausrichten des Trägers 22, auf welchem der Stator 12 gleitet. Demgemäß erfolgt die Ausrichtung des Trägers 22 nach allen Richtungen, so daß der Stator 12 mit dem Generatorgehäuse 20 fluchtet. Anschließend wird der Stator 12 vorteilhafterweise in das Generatorgehäuse 20 hineingezogen. Hierzu sind an wenigstens zwei Stellen am Umfang Zugösen 26 angeordnet, die in Fig. 6 zu erkennen sind. An den vier in Fig. 6 gezeigten Zugösen 26 werden Zugseile oder Zugstangen befestigt, welche vorzugsweise von einem hydraulisch betätigten Stellglied beaufschlagt werden.

Nachdem der Stator 12 auf diese Weise in das Generatorgehäuse 20 eingebracht ist, wird der Stator 12 darin verankert und der Träger 22 sowie die Unterfütterung 24 entfernt. Für die Entfernung des Trägers 22 aus der in Fig. 5 gezeigten Position kann nunmehr der hier nicht näher gezeigte Maschinenhauskran zum Einsatz kommen.

In Fig. 6 ist wie bereits angesprochen eine Stirnansicht des Stators 12 mit eingeführtem Träger 22, wobei sich der Stator 12 über die Unterfütterung 24 auf eine auf der Trägeroberläche befindlichen Gleitschicht 25 abstützt.

## Patentansprüche

1. Verfahren zum Einbau eines Stators (12) eines Turbogenerators in das Generatorgehäuse (20) bei Fehlen geeigneter Hebezeuge, insbesondere eines Krans mit ausreichender Hubkraft, welcher Turbogenerator in einer Kraftwerksanlage (10) aufgestellt wird, in welcher lediglich ein Maschinenhauskran verfügbar ist, dadurch gekennzeichnet, daß der Stator (12) möglichst nahe an den vorgesehenen Einbauort gebracht wird, zum Beispiel mittels Tieflader (14), daß der Stator (12) mittels mechanisch oder hydraulisch betätigter Hebestützen soweit angehoben wird, daß ein mit Rollen versehener Transportsattel (13) unter den Stator (12) eingefahren werden kann, auf welchem der Stator (12) abgesetzt und soweit zum Generatorgehäuse (20) bewegt wird, bis dessen Stirnseite und die des Stators (12) aneinandergrenzen, daß ein Träger (22) durch den zylindrischen Hohlraum des Stators (12) und des angrenzenden Generatorgehäuses (20) hindurchgeführt wird und beiderseits der freien Stirnseiten von Stator (12) und Generatorgehäuse (20) abgestützt wird, daß der Träger (22) nach allen Richtungen ausgerichtet wird, so daß der Stator (12) und das Generatorgehäuse (20) miteinander fluchten, daß der Träger (22) mit einer Gleitfläche (25) versehen wird, welche aus hoch tragfähigem, druckstabilem und gleitgünstigem Material, vorzugsweise aus Polytetrafluoräthylen oder Polyamid, besteht, daß die Gleitfläche mit dem Stator (12) zusammenarbeitet und der Stator (12) auf dieser so gebildeten Gleitbahn in seine Einbaulage im Generatorgehäuse (20) eingeführt wird, daß nach Erreichen der Einbaulage des Stators (12) dieser in dem Generatorgehäuse (20) verankert wird, und der Träger (22) entfernt wird.

2. Verfahren nach Anspruch 1, dadurch gekennzeichnet, daß der Stator (12) entsprechend seinem Innenprofil unterfüttert wird und daß die Unterfütterung (24) auf der am Träger (22) vorgesehenen Gleitfläche aufliegt.

3. Verfahren nach Anspruch 1 oder 2, dadurch gekennzeichnet, daß der Träger (22) mittels eines Raupenkrans in den Stator (12) und in das Generatorgehäuse (20) hineingeschoben wird und daß hierzu die Unterfütterung (24) zunächst unterhalb des Trägers (22) angeordnet ist und erst nach erfolgter Ausrichtung des Trägers (22) von unten nach oben versetzt wird.

4. Verfahren nach einem der vorherigen Ansprüche, dadurch gekennzeichnet, daß der Stator (12) in das Generatorgehäuse (20) gezogen wird.

5. Verfahren nach einem der vorherigen Ansprüche, dadurch gekennzeichnet, daß der Rollweg zwischen Entladeplatz, zum Beispiel vom Tieflader (14) und dem Generatorgehäuse (20) zumindest für den Transport des Stators (12) geebnet wird.

6. Verfahren nach einem der vorherigen Ansprüche, dadurch gekennzeichnet, daß der Stator (12) beim Entladen auf wenigstens 150 mm oberhalb des späteren Rollweges angehoben wird.

7. Verfahren nach einem der vorherigen Ansprüche, dadurch gekennzeichnet, daß die Gleitschicht (25) auf dem Träger (22) zusätzlich mit Schmiermittel beaufschlagt wird, um den Gleitwiderstand zu verringern.

## Claims

1. Method for mounting a stator (12) of a turbogenerator in the generator housing (20) in the absence of suitable hoisting gear, in particular of a crane with an adequate lift force, which turbogenerator is set up in a power station installation (10) in which only one power house crane is available, characterized in that the stator (12) is brought as close as possible to the provided mounting site, for example by means of a low loader (14), in that the stator (12) is raised so far by means of mechanically or hydraulically actuated hoisting supports that it is possible to drive in under the stator (12) a transport saddle (13) which is provided with rollers and on which the stator (12) is set down and moved towards the generator housing (20) until the end face of the latter and that of the stator (12) adjoin one another, in that a carrier (22) is guided through the cylindrical cavity of the stator (12) and of the adjoining generator housing (20) and is supported on both sides of the free end faces of the stator (12) and generator housing (20), in that the carrier (22) is aligned in all directions so that the stator (12) and the generator housing (20) are in line with one another, in that the carrier (22) is provided with a sliding surface (25) which consists of a pressure-stable material which is of high load-carrying capacity and has good sliding properties, preferably of polytetrafluoroethylene or polyamide, and in that the sliding surface cooperates with the stator (12) and the stator (12) is inserted on this sliding track thus formed into its mounting position in the generator housing (20) so that after the stator (12) has reached the mounting position it is anchored in the generator housing (20), and the carrier (22) is removed.

2. Method according to Claim 1, characterized in that the stator (12) is packed in accordance with its inner profile, and in that the packing (24) rests on the sliding surface provided on the carrier (22).

3. Method according to Claim 1 or 2, characterized in that the carrier (22) is slid by means of a crawler crane into the stator (12) and into the generator housing (20), and in that for this purpose the packing (24) is firstly arranged below the carrier (22) and is not displaced from the bottom to the top until after the carrier (22) has been aligned.

4. Method according to one of the preceding claims, characterized in that the stator (12) is drawn into the generator housing (20).

5. Method according to one of the preceding claims, characterized in that the rolling path between the unloading site, for example from the low loader (14), and the generator housing (20) is levelled, at least for transporting the stator (12).

6. Method according to one of the preceding claims, characterized in that when being unloaded the stator (12) is raised to at least 150 mm above the later rolling path.

7. Method according to one of the preceding claims, characterized in that a lubricant is additionally applied to the sliding layer (25) on the carrier (22), in order to reduce the sliding resistance.

## Revendications

1. Procédé de montage d'un stator (12) d'un turboalternateur dans une carcasse d'alternateur (20) en l'absence de moyens de levage adaptés, notamment en l'absence d'une grue disposant d'une force de lavage suffisante, lequel turboalternateur est installé dans une centrale (10) dans laquelle on dispose seulement d'une grue d'atelier, caractérisé par le fait que l'on amène le stator (12) le plus près possible de l'emplacement de montage prévu, par exemple à l'aide d'un véhicule surbaissé (14), que l'on soulève le stator (12) à l'aide de vérins mécaniques ou hydrauliques suffisamment pour pouvoir glisser sous le stator (12) un chariot de transport (13) muni de rouleaux, que l'on abaisse le stator (12) et on l'approche de la carcasse d'alternateur (20) de telle sorte que la face frontale du celle-ci et celle du stator (12) soient contigües, que l'on introduit une poutre support (22) à travers la cavité cylindrique du stator (12) et à travers la carcasse d'alternateur (20) contigüe et on supporte celle-ci des deux côtés des faces frontales dégagées du stator (12) et de la carcasse d'alternateur (20), que l'on aligne la poutre support (22) dans toutes les directions, de telle sorte que le stator (12) et la carcasse d'alternateur (20) soient mutuellement alignés, que l'on équipe la poutre support (22) d'une surface de glissement (25) en un matériau porteur, résistant à la compression et offrant de bonnes caractéristiques de glissement, de préférence en polytétrafluoroéthylène ou en polyamide, que la surface de glissement coopère avec le stator (12) et que l'on amène le stator (12) dans sa position de montage dans la carcasse d'alternateur (20), sur la surface de glissement ainsi formée, qu'une fois atteint la position de montage du stator (12) on cale le stator dans la carcasse d'alternateur (20) et on retire la poutre support (22).

2. Procédé selon la revendication 1, caractérisé par le fait que l'on applique une garniture sur le contour intérieur du stator (12) et par le fait que la garniture (24) repose sur la surface de glissement prévue sur la poutre support (22).

3. Procédé selon la revendication 1 ou 2, caractérisé par le fait que l'on glisse la poutre support (22) dans le stator (12) et la carcasse d'alternateur (20) à l'aide d'une grue sur chenilles et par le fait que l'on dispose à cet effet la garniture (24) tout d'abord sous la poutre support (22) et qu'on la déplace du bas vers le haut une fois l'alignement de la poutre support (22) terminé.

4. Procédé selon une des revendications précédentes, caractérisé par le fait que l'on tire le stator (12) dans la carcasse d'alternateur (20).

5. Procédé selon une des revendications précédentes, caractérisé par le fait que l'on aplanit le chemin de roulement entre l'emplacement de déchargement, par exemple le véhicule surbaissé, et la carcasse d'alternateur (20), au moins pour le transport du stator (12).

6. Procédé selon une des revendications précédentes, caractérisé par le fait que lors du déchargement on soulève le stator (12) à au moins 150 mm au-dessus du chemin de roulement.

7. Procédé selon une des revendications précédentes, caractérisé par le fait que l'on applique un lubrifiant sur la couche de glissement (25) sur la poutre support (22) aux fins de réduire la résistance au glissement.
